# EUROPEAN PATENT APPLICATION

(11) **EP 4 155 986 A1**
(43) Date of publication of application: **29.03.2023**
(21) Application number: 20936856.2
(22) Date of filing: 21.05.2020
(51) Int. Cl.: G06F 21/32

(54) **CONTROL METHOD, CONTROL PROGRAM, AND INFORMATION PROCESSING DEVICE**

(71) Applicant: FUJITSU LIMITED, Kawasaki-shi, Kanagawa 211-8588 (JP)
(72) Inventor: HARA, Masahiro, Kawasaki-shi, Kanagawa 211-8588 (JP); FUJII, Akira, Kawasaki-shi, Kanagawa 211-8588 (JP)
(74) Representative: Hoffmann Eitle
(86) International application number: PCT/JP2020/020100
(87) International publication number: WO 2021/234901

(57) **Abstract**

A control method includes executing, by a computer, processing including: acquiring a plurality of captured images captured by a plurality of cameras that capture different positions in an area; presuming a movement state of any of candidates for persons who have entered the area based on facial images included in the plurality of acquired captured images; determining whether or not a similarity between a past movement state of the any of candidates and the presumed movement state meets a criterion by reference to a storage unit that stores past movement states of the candidates for persons who have entered the area; selecting a candidate list including the any of candidates among candidate lists of the persons who have entered the area in the past in a case where the similarity meets the criterion; and reading out biometric information of a candidate included in the selected candidate list from a biometric information database to a storage unit.

## Description

### FIELD

The present case relates to a control method, a control program, and an information processing device.

### BACKGROUND

A biometric authentication technique of narrowing down candidates by authentication using first biometric information and performing personal authentication by authentication using second biometric information is disclosed (see, for example, Patent Document 1).

### CITATION LIST

### PATENT DOCUMENT

Patent Document 1: Japanese Laid-open Patent Publication No. 2019-067075

### SUMMARY

### [TECHNICAL PROBLEM]

It is conceivable to acquire a user's facial image with a camera, narrow down candidates, read biometric information registered for the narrowed down candidates, and perform a multi-biometric authentication processing of collating the read biometric information with biometric information acquired from the user. However, it is uncertain whether or not the narrowed down candidates will authenticate. Therefore, useless reading processing or the like may be performed, and an authentication time may become long.

In one aspect, an object of the present invention is to provide a control method, a control program, and an information processing device capable of shortening an authentication time.

### [SOLUTION TO PROBLEM]

In one aspect, a control method includes executing, by a computer, processing including: acquiring a plurality of captured images captured by a plurality of cameras that capture different positions in an area; presuming a movement state of any of candidates for persons who have entered the area based on facial images included in the plurality of acquired captured images; determining whether or not a similarity between a past movement state of the any of candidates and the presumed movement state meets a criterion by reference to a storage unit that stores past movement states of the candidates for persons who have entered the area; selecting a candidate list including the any of candidates among candidate lists of the persons who have entered the area in the past in a case where the similarity meets the criterion; and reading out biometric information of a candidate included in the selected candidate list from a biometric information database to a storage unit.

In another aspect, a control method includes, executing, by a computer, processing including: acquiring a plurality of captured images captured by a plurality of cameras that capture different positions in an area; determining whether or not there is a purchase history in the area by reference to a storage unit that stores the purchase history in the area for candidates for persons who have entered the area based on facial images included in the plurality of acquired captured images; and controlling whether or not to read biometric information of a candidate included in a candidate list of the persons who have entered the area in the past from a biometric information database to a storage unit according to the purchase history.

In another aspect, a control method includes, executing, by a computer, processing including: acquiring a plurality of captured images captured by a plurality of cameras that capture different positions in an area; determining whether or not there is a purchase history in the area by reference to a storage unit that stores the purchase history in the area for candidates for persons who have entered the area based on facial images included in the plurality of acquired captured images; selecting a candidate list including any of candidates among candidate lists of the persons who have entered the area in the past in a case where there is the purchase history; and reading biometric information of a candidate included in the selected candidate list from a biometric information database to a storage unit.

According to an aspect of the embodiments, an control method executed by a computer, the control method includes acquiring a plurality of captured images captured by a plurality of cameras that capture different positions in an area; presuming a movement state of any of candidates for persons who have entered the area based on facial images included in the plurality of acquired captured images; determining whether or not a similarity between a past movement state of the any of candidates and the presumed movement state meets a criterion by reference to a storage unit that stores past movement states of the candidates for persons who have entered the area; selecting a candidate list that includes the any of candidates among candidate lists of the persons who have entered the area in the past in a case where the similarity meets the criterion; and reading out biometric information of a candidate included in the selected candidate list from a biometric information database to a storage unit.

### [ADVANTAGEOUS EFFECTS OF INVENTION]

The authentication time can be shortened.

### BRIEF DESCRIPTION OF DRAWINGS

FIG. 1 is a diagram illustrating a multi-biometric authentication processing;
FIG. 2A is a diagram illustrating a layout in a store, and FIG. 2B is a diagram illustrating a connection between cameras;
FIG. 3 is a diagram illustrating combination of candidate lists;
FIG. 4 is a block diagram illustrating an overall configuration of a multi-biometric authentication system;
FIG. 5A is a table illustrating user information stored in a user information database, FIG. 5B is a table illustrating facial feature data stored in a facial feature database, and FIG. 5C is a table illustrating vein data stored in a vein database;
FIG. 6A is a table illustrating a purchase history stored in a purchase history database, and FIG. 6B is a table illustrating a movement history stored in a movement history database;
FIG. 7 is a table illustrating candidate information stored in a candidate information database;
FIGs. 8A and 8B are flowcharts illustrating an example of operation of a store system;
FIG. 9 is a flowchart illustrating an example of multi-biometric authentication processing executed by an information processing device;
FIG. 10 is a flowchart illustrating an example of the multi-biometric authentication processing executed by the information processing device;
FIG. 11 is a diagram illustrating a narrowing list;
FIG. 12 is a diagram illustrating calculation of a movement state;
FIG. 13A is a diagram illustrating aggregation of past movement states of a candidate User_A, and FIG. 13B is a diagram illustrating comparison of the movement states of the candidate User_A;
FIGs. 14A and 14B are diagrams illustrating Modification 1;
FIG. 15 is a flowchart illustrating another example of the multi-biometric authentication processing executed by the information processing device;
FIG. 16 is a flowchart illustrating another example of the multi-biometric authentication processing executed by the information processing device; and
FIG. 17 is a block diagram illustrating a hardware configuration of the information processing device.

### DESCRIPTION OF EMBODIMENTS

Prior to description of embodiments, multi-biometric authentication that narrows down a search set by first modality and specifies a user by another modality will be described.

Biometric authentication is a technique for verifying a person in question using biometric features such as fingerprints, faces, and veins. In the biometric authentication, the person in question is verified by comparing (collating) collation biometric information acquired by a sensor with registered biometric information registered in advance in a situation where verification is required, and determining whether or not similarity is equal to or higher than an identity verification threshold value. The biometric authentication is used in various fields such as bank ATMs and room entry/exit management, and in recent years, it has begun to be used for cashless payments in supermarkets, convenience stores, and the like.

The biometric authentication includes 1:1 authentication that verifies coincidence with registered biometric information specified by an ID, a card, or the like, and 1:N authentication that searches for coincident registered biometric information from a plurality of pieces of registered biometric information. In stores, or the like, 1:N authentication is often desired from the viewpoint of convenience. However, since the biometric information fluctuates depending on an acquisition state or the like, a possibility of erroneous collation increases as the number of pieces of registered biometric information to be searched for increases. Therefore, an operation of narrowing down with a simple PIN code or the like to make a search set sufficiently small, and then performing 1:N authentication is conducted. How small the search set should be to reach a practical level depends on a biometric authentication method. However, even if the operation is simple, the PIN code input impairs convenience, so a biometric authentication system that does not require an ID or card is desired.

Therefore, a method of using a plurality of types of modality has been proposed, in which a search set is narrowed down by the first modality, and a user is specified by the second modality. Modality is a type of biometric feature, such as fingerprint, vein, iris, face shape, or palm shape, for example. Therefore, a fingerprint and a vein on the same finger are of different types of modality. Since it is inconvenient to individually input a plurality of types of modality, a method of acquiring a palm vein at the same time as fingerprint input, a method of capturing a facial image at the time as palm vein input, and the like have been proposed.

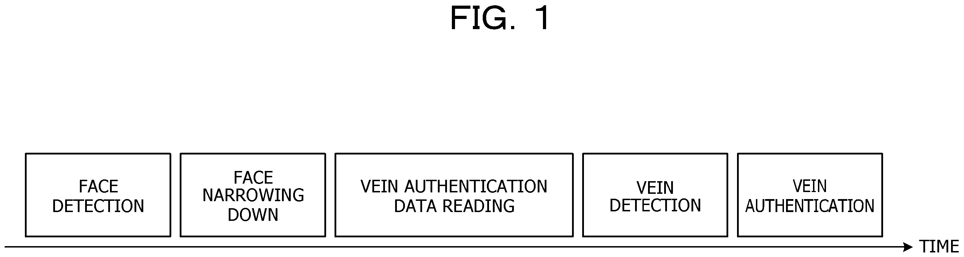

In the method of narrowing down candidates by face authentication and specifying a person in question by a palm vein, for example, processing of creating an ID list of N persons who are candidates by the face authentication, executing the 1:N authentication using the palm vein within a set of the obtained ID list, and specifying the user is conducted. In such multi-biometric authentication, it takes time to read vein authentication data, as illustrated in FIG. 1. This is because a vein data size is larger than a facial feature data size. In a store or the like, it is desirable to reduce an authentication time of purchasers in order to improve efficiency of cash register. Therefore, it is favorable to shorten the entire authentication time by reading the vein authentication data in advance at the timing of payment at the cash register.

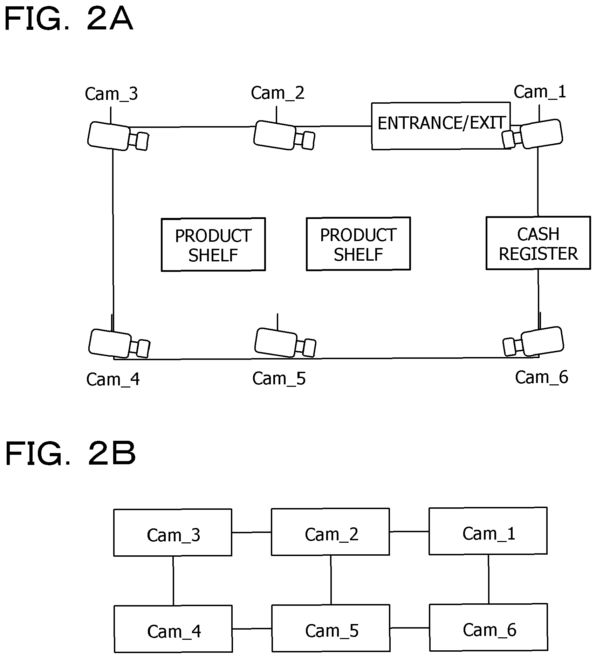

FIG. 2A is a diagram illustrating a layout in a store. As illustrated in FIG. 2A, in the store, an entrance/exit is provided, product shelfs are arranged, and a cash register is arranged. These layouts limit a traveling route of persons. A plurality of cameras Cam_1 to Cam_6 is installed so that a facial image of a person traveling on the limited traveling route can be acquired. Such a layout enables creation of a graph with camera positions as nodes and connection between cameras in which the person can travel as an edge, as illustrated in FIG. 2B.

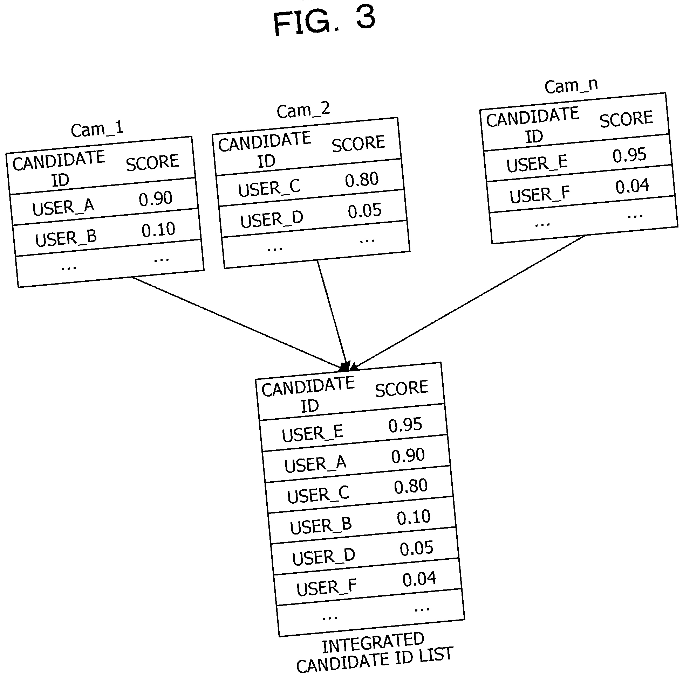

For example, as illustrated in FIG. 3, a method of obtaining a candidate list of people in a store by combining candidate lists narrowed down using facial images obtained by respective cameras is conceivable. In this case, the vein authentication data of all the candidates included in the plurality of candidate lists will be read, which takes time. Therefore, there may be a case where reading of the vein authentication data has not been completed even though the person who entered the store has arrived at the cash register.

Therefore, in the following embodiments, an object is to provide an information processing device, a control method, and a control program capable of shortening an authentication time by shortening a time for reading biometric information of candidates included in a plurality of candidate lists.

### [Embodiments]

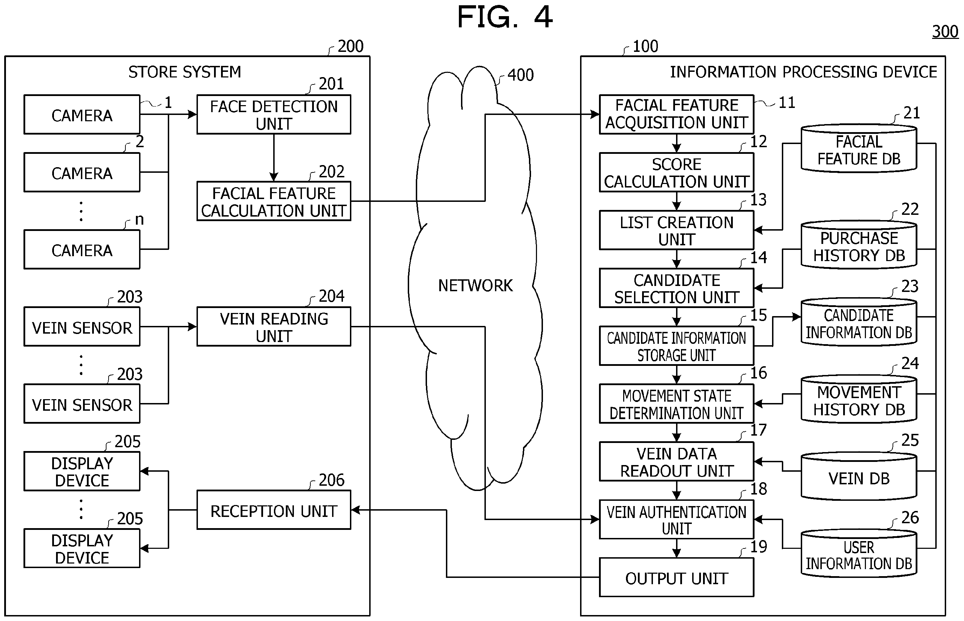

FIG. 4 is a block diagram illustrating an overall configuration of a multi-biometric authentication system 300. As illustrated in FIG. 4, the multi-biometric authentication system 300 has a configuration in which an information processing device 100 and a store system 200 are connected by a wired or wireless network 400.

As illustrated in FIG. 4, the information processing device 100 includes a facial feature acquisition unit 11, a score calculation unit 12, a list creation unit 13, a candidate selection unit 14, a candidate information storage unit 15, a movement state determination unit 16, a vein data readout unit 17, a vein authentication unit 18, an output unit 19, and the like. Furthermore, the information processing device 100 includes a facial feature database 21, a purchase history database 22, a candidate information database 23, a movement history database 24, a vein database 25, a user information database 26, and the like.

A store system 200 includes a plurality of cameras 1 to n, a face detection unit 201, a facial feature calculation unit 202, a vein sensor 203, a vein reading unit 204, a display device 205, a reception unit 206, and the like. A plurality of the vein sensors 203 and a plurality of the display devices 205 may be provided. Furthermore, in a case of performing the multi-biometric authentication in a plurality of stores, each of the plurality of store systems 200 is provided in each store.

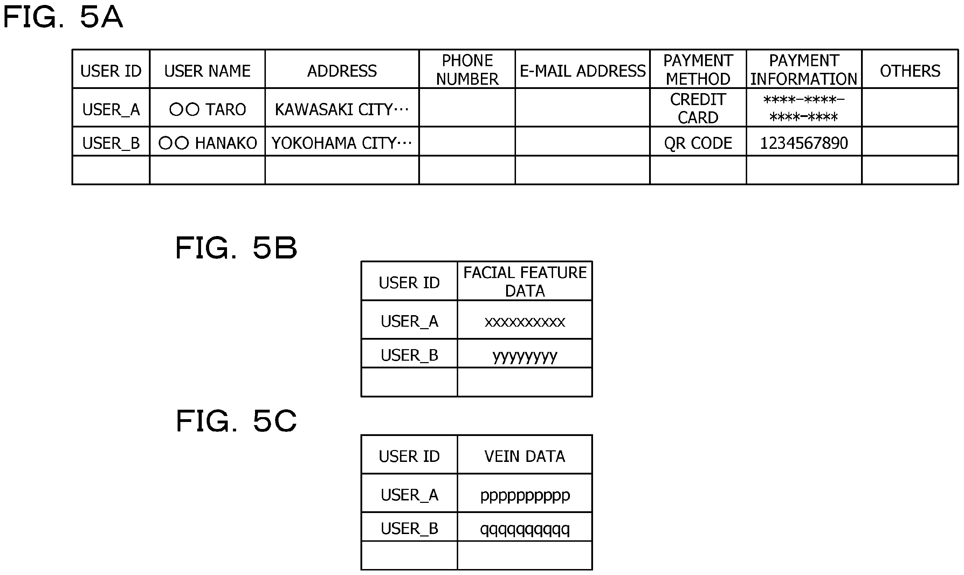

FIG. 5A is a table illustrating user information stored in the user information database 26. As illustrated in FIG. 5A, in the user information, a user ID registered in advance is associated with a name, an address, a payment method, payment information, and the like. By using this information, it is possible to allow a user who has succeeded in the multi-biometric authentication to make a payment.

FIG. 5B is a table illustrating facial feature data stored in the facial feature database 21. As illustrated in FIG. 5B, facial feature data is associated with each user ID. Note that the facial feature data can be registered in advance by each user. FIG. 5C is a table illustrating vein data stored in the vein database 25. As illustrated in FIG. 5C, the vein data is associated with each user ID. Note that the vein data can be registered in advance by each user.

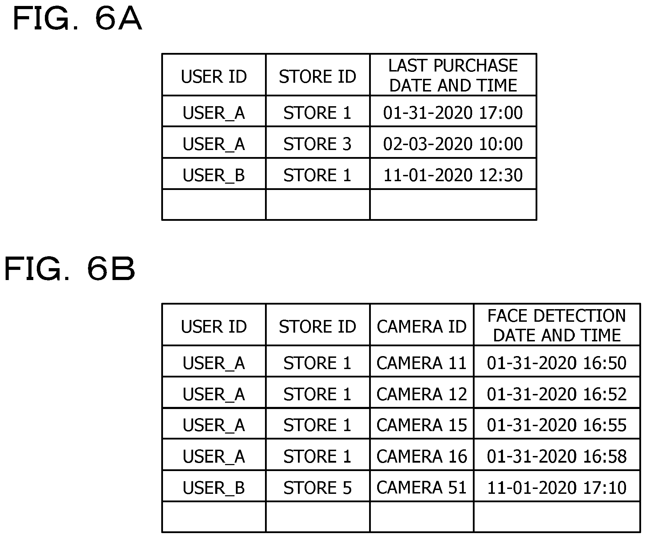

FIG. 6A is a table illustrating a purchase history stored in the purchase history database 22. As illustrated in FIG. 6A, each user ID is associated with the purchase history at each store. By using this information, in a case where the user enters the store, it is possible to determine whether or not there is the purchase history at the store. FIG. 6B is a table illustrating a movement history stored in the movement history database 24. As illustrated in FIG. 6B, each user ID is associated with the store where the facial image has been acquired, the camera, date and time, and the like. By using this information, it is possible to acquire a movement state in which the user has moved in the store.

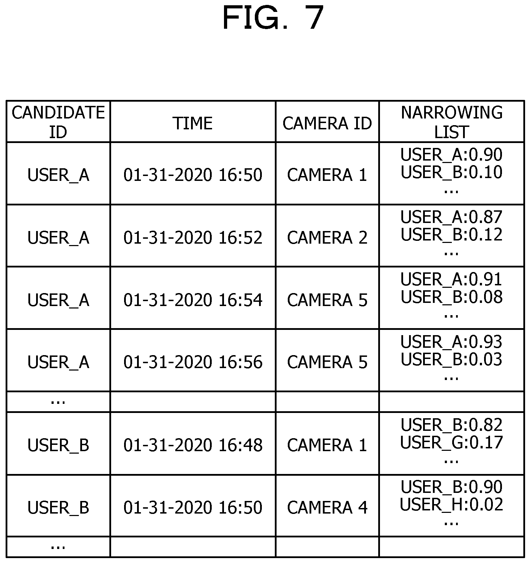

FIG. 7 is a table illustrating candidate information stored in the candidate information database 23. The candidate information in FIG. 7 is information that is temporarily stored in the middle of multi-biometric authentication processing. As illustrated in FIG. 7, each candidate ID is associated with time when a face has been detected, a camera ID with which the face has been detected, a narrowing list created when the face has been detected, and the like. By using this information, it is possible to refer to when and with which camera the face has been detected for each candidate ID. Furthermore, it is possible to refer to the narrowing list created when the face has been detected.

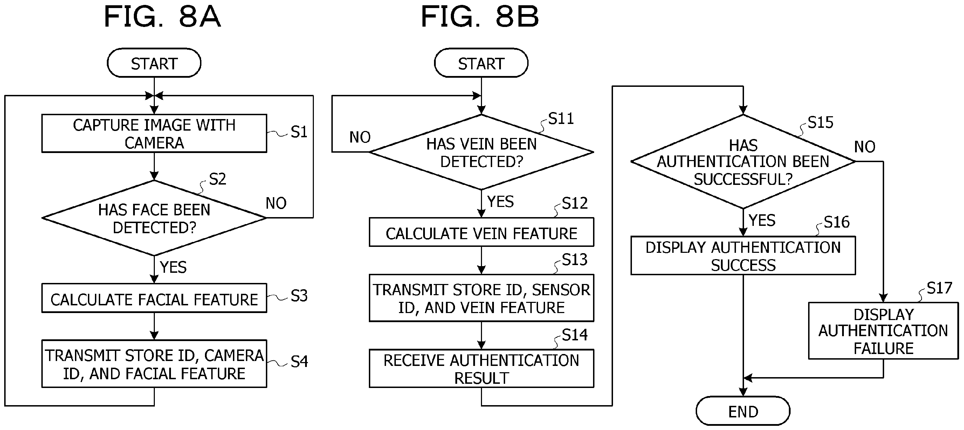

FIGs. 8A and 8B are flowcharts illustrating an example of operation of the store system 200. The cameras 1 to n capture images (step S1). The face detection unit 201 determines whether or not a face has been detected by any of the cameras 1 to n with a predetermined sampling period (step S2). For example, step S2 is executed at time t1, t2, ..., and the like. In a case where "No" is determined in step S2, the operation is executed again from step S1.

In a case where "Yes" is determined in step S2, the facial feature calculation unit 202 calculates a feature of the detected face (step S3). Next, the facial feature calculation unit 202 transmits, to the information processing device 100, the facial feature calculated in step S3 in association with the camera ID with which the face has been detected in step S2 and an ID of the store in which the camera is installed (step S4). Thereafter, the operation is executed again from step S1.

The flowchart of FIG. 8B is executed, for example, in a case where a total amount of products is calculated at the cash register of the store. First, the vein reading unit 204 determines whether or not the vein sensor 203 has detected a vein (step S11). In a case where "No" is determined in step S11, step S11 is executed again.

In a case where "Yes" is determined in step S11, the vein reading unit 204 calculates a vein feature from the detected vein (step S12). Next, the vein reading unit 204 transmits, to the information processing device 100, the vein feature calculated in step S12 in association with an ID of the vein sensor that has detected the vein in step S11 and the ID of the store in which the vein sensor is installed (step S13).

Next, the reception unit 206 receives a vein authentication result by the information processing device 100 (step S14). Next, the reception unit 206 determines whether or not the received vein authentication result shows authentication success (step S15). In a case where "Yes" is determined in step S15, the display device 205 displays information related to the authentication success (step S16). Furthermore, payment for the total amount at the cash register is performed. The display device 205 displays a payment result. Thereafter, the execution of the flowchart ends. In a case where "No" is determined in step S15, the display device 205 displays information related to authentication failure (step S17). In this case, payment for the total amount at the cash register is not performed. Thereafter, the execution of the flowchart ends.

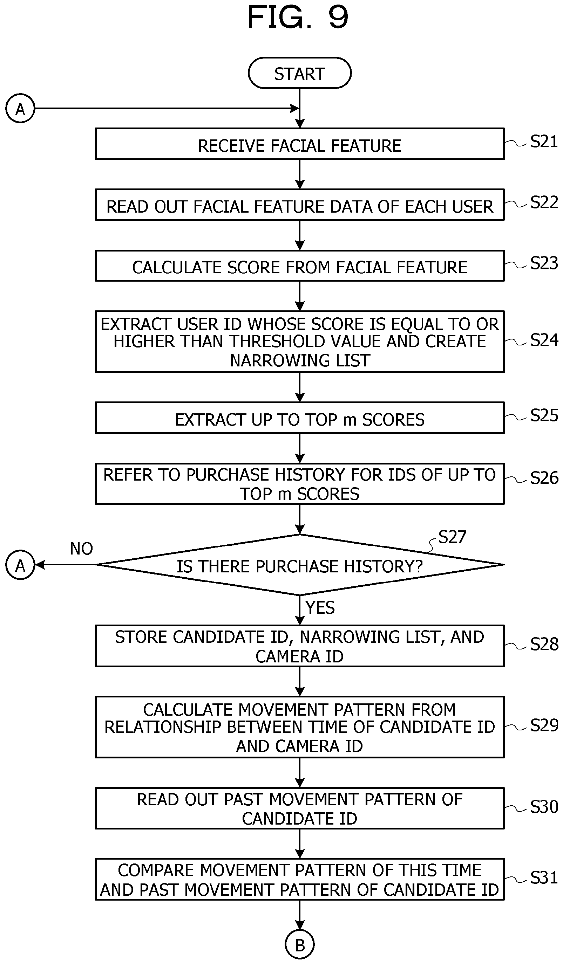

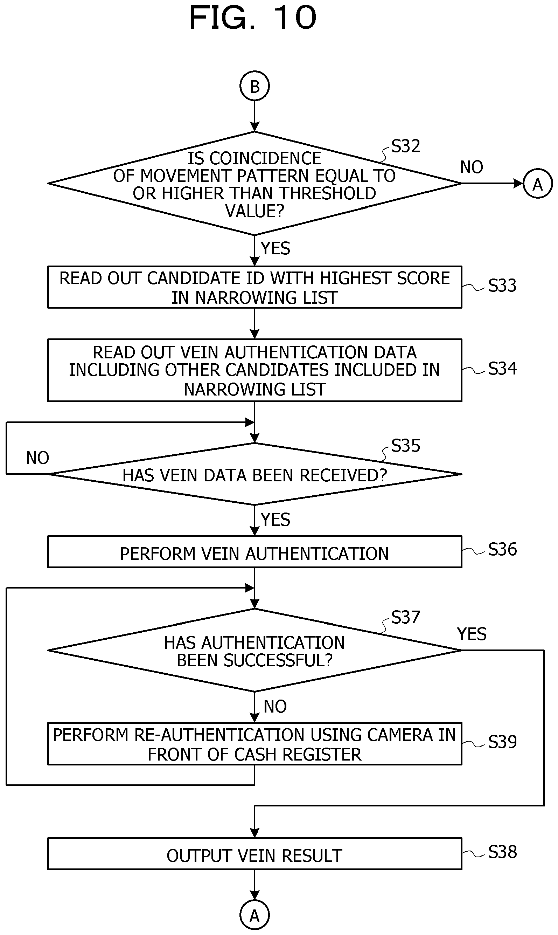

FIGs. 9 and 10 are flowcharts illustrating an example of the multi-biometric authentication processing executed by the information processing device 100. The facial feature acquisition unit 11 acquires the facial feature from the facial feature calculation unit 202 (step S21). Next, the score calculation unit 12 reads facial feature data of each user from the facial feature database 21 (step S22). Next, the score calculation unit 12 calculates the similarity between the facial feature received in step S21 and the facial feature data of each user as a score (step S23).

Next, the list creation unit 13 creates a narrowing list by extracting the user ID whose score is equal to or higher than a threshold value as a candidate ID (step S24). Note that since the narrowing list is created each time the facial feature is received in step S21, the narrowing list is created for each camera that detects the face with the sampling period of step S2.

Next, the list creation unit 13 extracts the candidate IDs up to top m scores from the narrowing list created in step S24 (step S25).

Next, the candidate selection unit 14 refers to the purchase history database 22 for the candidate IDs up to the top m scores (step S26). Next, the candidate selection unit 14 determines whether or not there is a purchase history at the store for the candidate IDs up to the top m scores (step S27). In a case where "No" is determined in step S27, the operation is executed again from step S21.

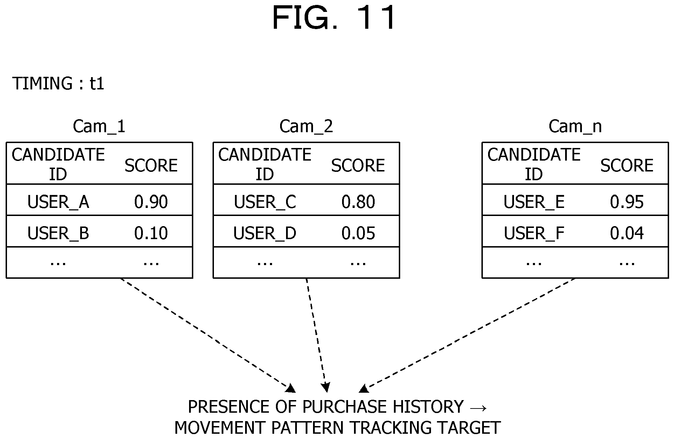

In a case where "Yes" is determined in step S27, the candidate information storage unit 15 temporarily stores, in the candidate information database 23, the candidate ID having the purchase history in association with the time when the face has been detected, the camera ID with which the face has been detected, and the narrowing list (step S28). Each narrowing list in FIG. 11 is a narrowing list created for each camera at timing t1. In this example, for example, when persons presumed to have the candidate IDs of User_A, User_C, and User_E have the purchase history at the store in the past, the persons are extracted as tracking targets of the movement state. The movement state and the like are stored in the candidate information database 23 as candidate information for all the target candidate IDs.

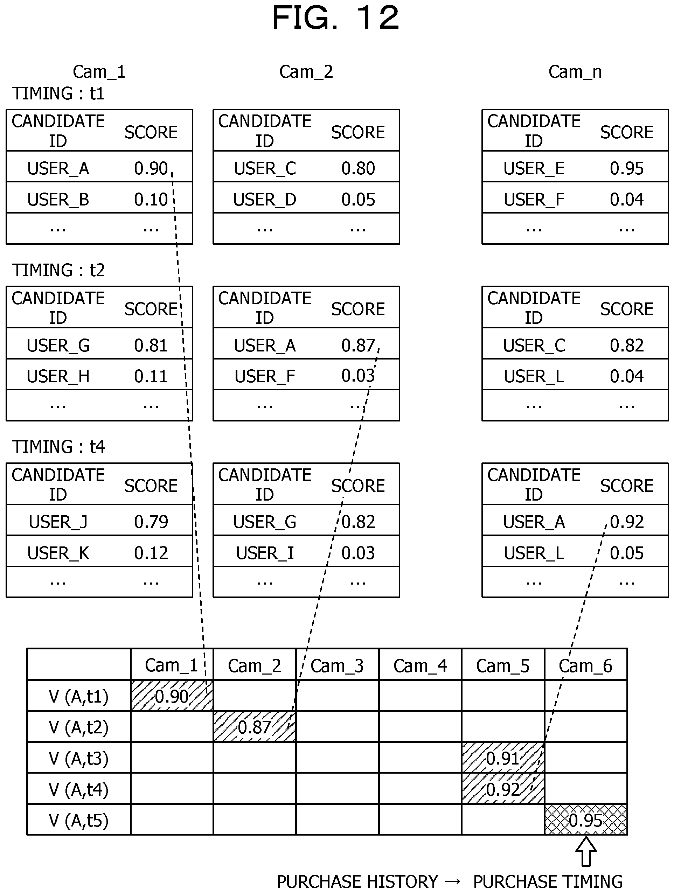

Next, the movement state determination unit 16 calculates the movement state of each candidate ID stored in step S28 from the relationship between the time when the face has been detected and the camera ID (step S29). FIG. 12 is a diagram illustrating calculation of the movement state. FIG. 12 focuses on one candidate ID "User_A" as an example. In a case where the candidate User_A is within the top m scores, the movement state determination unit 16 creates a vector "V (candidate ID, time)" having a score of the camera Cam_j in a predetermined time range (time t1, t2, ...) from the time of entering the store as an element. For example, V (A, t1) is (0.90, 0, ..., 0). V (A, t2) is (0, 0.87, ..., 0). Furthermore, the movement state determination unit 16 also temporarily records a face narrowing list.

The movement state determination unit 16 obtains a pattern of the score vector in the time change (t1, t2, ...) of the candidate User_A. Since it is sufficient to know the movement state immediately before the payment at the cash register, the time change to be recorded may be whichever shorter of A or B below. When the candidate User_A purchases and performs the payment at the cash register, the movement state determination unit 16 records the movement state as a purchase history.
A Time range in which the candidate ID exists
B Defined maximum time range

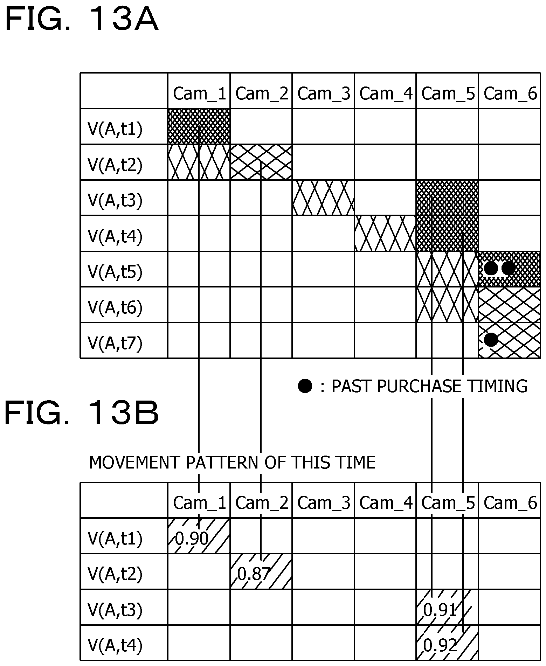

Next, the movement state determination unit 16 reads out a past movement state from the movement history database 24 for each candidate ID stored in step S2 (step S30). FIG. 13A is a diagram illustrating aggregation of the past movement states of the candidate User_A. As illustrated in FIG. 13A, the movement state determination unit 16 adds and normalizes the scores in the movement state of the candidate User_A at the time of past purchase. For example, when the score is 0 to 1, the maximum value is 1. A weight increases when the timing of detection by the camera is high. In FIG. 13A, a dark-colored portion corresponds to a portion having a large weight.

Next, the movement state determination unit 16 compares the current movement state of each candidate ID stored in step S28 with the past movement state (step S31). FIG. 13B illustrates the comparison of the movement states for User_A.

Next, the movement state determination unit 16 determines whether or not the degree of coincidence is equal to or higher than a threshold value in the comparison in step S31 (step S32). When the candidate User_A is detected within the top m scores at the entry to the store of this time, the "current movement state" and the "aggregation result of the past movement states" are compared. As the similarity between vectors, cosine similarity or the like can be used. Dynamic programming matching (DP) or the like can be used for the comparison between time-series vectors. Coincidence of a pattern with a pattern of when the "timing of the payment at the cash register" is recorded at the next time. In the case of coincidence, one with the highest score in a movement state matrix of the candidate User_A is selected. This is because it is most likely that it is the timing of the payment at the cash register of the candidate.

In a case where "No" is determined in step S32, the operation is executed again from step S21. In a case where "Yes" is determined in step S32, the vein data readout unit 17 reads out the candidate ID with the highest score in the narrowing list stored in the candidate information database 23 (step S33). Next, the vein data readout unit 17 reads out the vein data from the vein database 25, including other candidates included in the narrowing list read in step S33 (step S34).

Next, the vein data readout unit 17 determines whether or not the vein data has been received from the vein reading unit 204 (step S35). In a case where "No" is determined in step S35, the operation is executed again from step S21. In a case where "Yes" is determined in step S35, the vein authentication unit 18 performs vein authentication by calculating the similarity between the vein data received in step S35 and the vein data read in step S34 (step S36).

The output unit 19 determines whether or not the highest similarity among the similarities calculated in step S36 is equal to or higher than a threshold value (step S37). That is, in step S37, whether or not the vein authentication has been successful is determined. In a case where "Yes" is determined in step S37, the output unit 19 transmits a vein authentication result of step S37 to the reception unit 206 (step S38). Thereafter, the operation is executed again from step S21.

In a case where "No" is determined in step S37, the multi-biometric authentication is re-executed using the facial image acquired by the camera installed in front of the cash register (step S39). That is, the score calculation unit 12 calculates the score for each user ID by collating the facial feature detected from the facial image with the facial feature data stored in the facial feature database 21. The list creation unit 13 creates the narrowing list by extracting the user IDs whose scores are equal to or higher than a threshold value. The vein data readout unit 17 reads out the vein data from the vein database 25 for the user ID included in the narrowing list. The vein authentication unit 18 collates the vein feature calculated from the vein detected by the vein sensor with the vein data, and determines whether or not the highest similarity is equal to or higher than a threshold value.

According to the present embodiment, the facial features of a plurality of captured images captured by the plurality of cameras that capture different positions in the store are acquired. The movement state of any of the candidates among the candidates (narrowing list) for the persons who have entered the store is presumed based on the acquired facial features. Whether or not the similarity between the past movement state of the any of the candidates and the presumed movement state meets a criterion by reference to the past movement states of the candidates for the persons who have entered the store. In a case where the similarity meets the criterion as a result of the determination, a candidate list including the any of the candidates is selected in the candidate list of the persons who have entered the store in the past, and the vein data of the candidate included in the selected candidate list is read out. By performing such processing, the candidate can be selected with high accuracy according to the movement state. Thereby, readout of unnecessary vein data is suppressed, and a vein readout time is shortened. As a result, the authentication time can be shortened. By considering the purchase history, the accuracy of candidate selection is further improved. Note that, in the present embodiment, the vein is used as the second modality, but another modality may be used.

### (Modification 1)

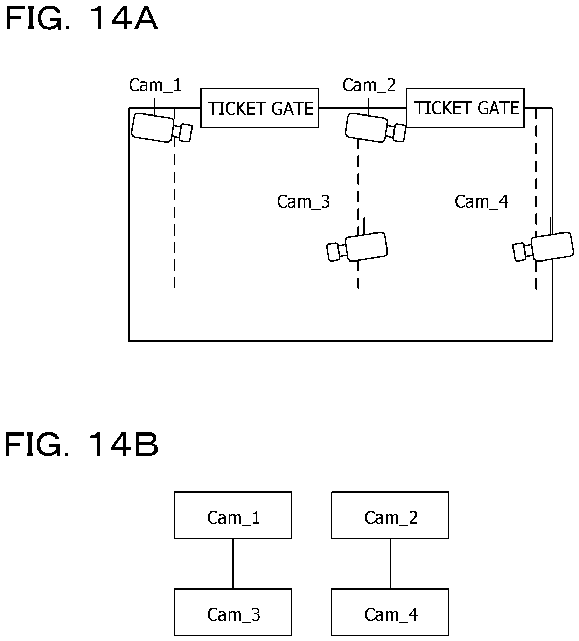

The above-described embodiment has focused on the payment at the cash register in the store, but the present embodiment is not limited thereto. For example, railway users tend to pass through the same ticket gates at the same station at similar times. Therefore, as illustrated in FIG. 14, the present embodiment can be applied to a case where a movement state is acquired by installing a plurality of cameras at a railway station, and the users pass through the ticket gate using the vein authentication or the like. In this case, the purchase history described in the embodiment may be used as a ticket gate passage history.

### (Modification 2)

In the above-described embodiment, the narrowing down is performed based on the movement state of the user, but the present embodiment is not limited thereto. For example, the narrowing down may be performed based on the purchase history of the user without acquiring the movement state.

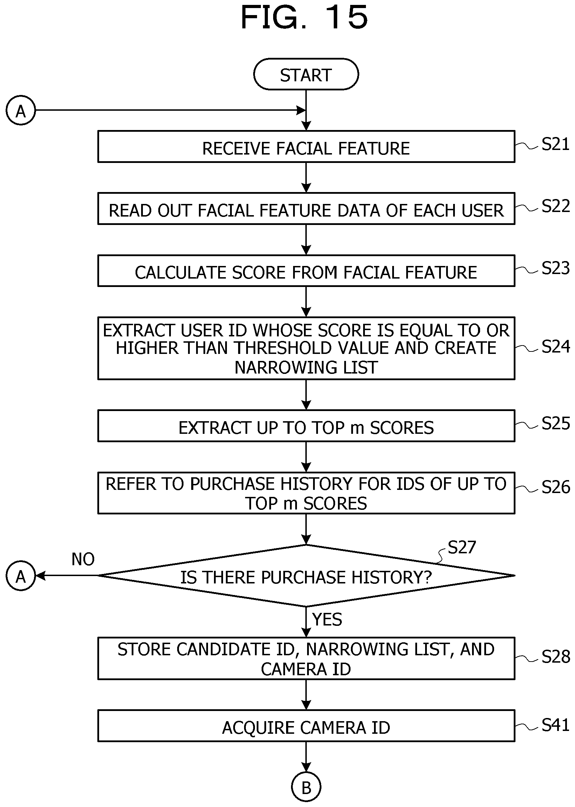

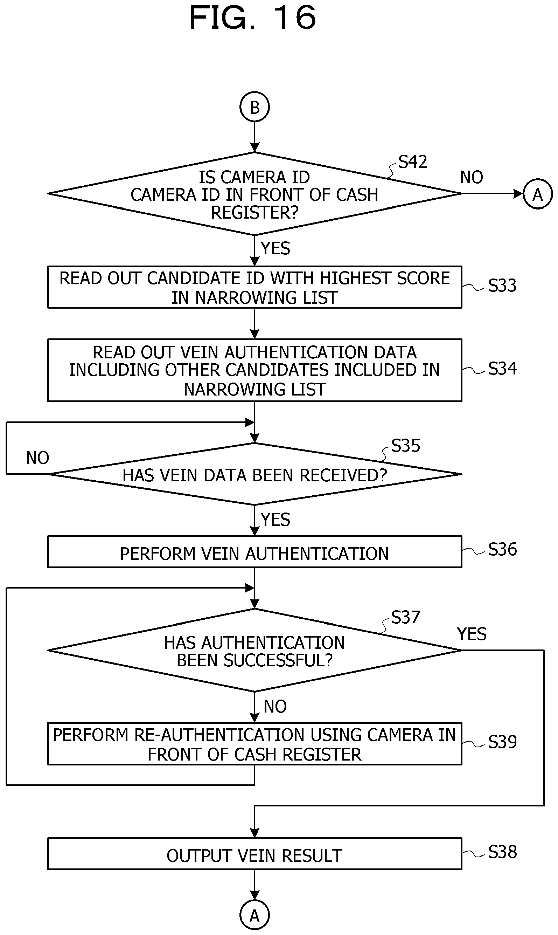

FIGs. 15 and 16 are flowcharts illustrating another example of the multi-biometric authentication processing executed by the information processing device 100. First, similar processing to steps S21 to S28 of FIG. 9 is performed. Next, the vein data readout unit 17 acquires the camera ID from the candidate information stored in the candidate information database 23 (step S41). Next, the vein data readout unit 17 determines whether or not the camera ID acquired in step S41 is a predetermined camera ID (for example, the camera ID in front of the cash register) (step S42). In a case where "No" is determined in step S42, the operation is executed again from step S21. In a case where "Yes" is determined in step S42, the operation is executed again from step S33.

According to the present modification, readout of the vein data is controlled according to the purchase history. Thereby, readout of unnecessary vein data can be suppressed. As a result, the authentication time can be shortened. Furthermore, according to the present modification, the vein authentication target is narrowed down according to the purchase history. Thereby, readout of unnecessary vein data can be suppressed. As a result, the authentication time can be shortened.

### (Hardware Configuration)

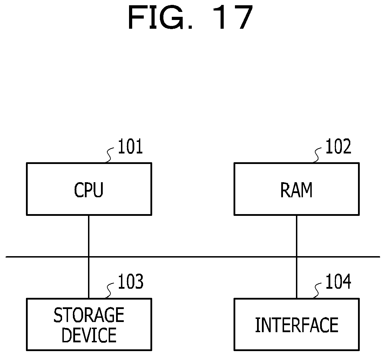

FIG. 17 is a block diagram illustrating a hardware configuration of the information processing device 100. As illustrated in FIG. 17, the information processing device 100 includes a central processing unit (CPU) 101, a random access memory (RAM) 102, a storage device 103, an interface 104, and the like.

The central processing unit (CPU) 101 is a central processing unit. The CPU 101 includes one or more cores. The random access memory (RAM) 102 is a volatile memory that temporarily stores a program to be executed by the CPU 101, data to be processed by the CPU 101, and the like. The storage device 103 is a nonvolatile storage device. For example, a read only memory (ROM), a solid state drive (SSD) such as a flash memory, a hard disk to be driven by a hard disk drive, or the like may be used as the storage device 103. The storage device 103 stores a control program. The interface 104 is an interface device with an external device. For example, the interface 104 is an interface device with a local area network (LAN).

Each unit of the information processing device 100 is implemented by the CPU 101 executing the control program. Note that hardware such as a dedicated circuit may be used as each unit of the information processing device 100.

In each of the above examples, the store is an example of an area. The facial feature acquisition unit is an example of an acquisition unit that acquires the facial features of a plurality of captured images captured by the plurality of cameras that capture different positions in the area. The movement state determination unit 16 is an example of a determination unit that presumes the movement state of any of the candidates for the persons who have entered the area based on the facial features acquired by the acquisition unit, and determines whether or not the similarity between the past movement state of the any of the candidates and the presumed movement state meets a criterion by reference to a storage unit that stores the past movement states of the candidates for the persons who have entered the area. The narrowing list is an example of candidates for persons who have entered the area. The candidates within the top m scores in the narrowing list are examples of the above-described any of the candidates. The vein data readout unit 17 is an example of a readout unit that selects a candidate list including the any of the candidates among the candidate lists of the persons who have entered the area in the past, and reads out the biometric information of the candidate included in the selected candidate list from the biometric information database to a storage unit, in a case where the similarity meets the criterion. The candidate selection unit 14 is an example of a selection unit that selects the candidates for persons who have entered the area. The vein authentication unit 18 is an example of an authentication unit that performs authentication by collating biometric information acquired from the person in the area and the biometric information read in the storage unit. Furthermore, the candidate selection unit 14 is an example of a determination unit that refers to a storage unit that stores the purchase history in the area for the candidate for the person who has entered the area based on the facial feature acquired by the acquisition unit, and determines whether or not there is the purchase history in the area. The vein data readout unit 17 is an example of a readout unit that controls whether or not to read out the biometric information of the candidate included in the candidate list of the persons who have entered the area in the past from the biometric information database to the storage unit according to the purchase history. Furthermore, the candidate selection unit 14 is an example of a determination unit that refers to a storage unit that stores the purchase history in the area for the candidate for the person who has entered the area based on the facial feature acquired by the acquisition unit, and determines whether or not there is the purchase history in the area. The vein data readout unit 17 is an example of a readout unit that selects a candidate list including the any of the candidates among the candidate lists of the persons who have entered the area in the past, and reads out the biometric information of the candidate included in the selected candidate list from the biometric information database to the storage unit according to the purchase history.

While the embodiments of the present invention have been described above in detail, the present invention is not limited to such specific embodiments, and various modifications and alterations may be made within the scope of the present invention described in the claims.

### REFERENCE SIGNS LIST

- 1 to n: Camera
- 11: Facial feature acquisition unit
- 12: Score calculation unit
- 13: List creation unit
- 14: Candidate selection unit
- 15: Candidate information storage unit
- 16: Movement state determination unit
- 17: Vein data readout unit
- 18: Vein authentication unit
- 19: Output unit
- 21: Facial feature database
- 22: Purchase history database
- 23: Candidate information database
- 24: Movement history database
- 25: Vein database
- 26: User information database
- 100: Information processing device
- 200: Store system
- 201: Face detection unit
- 202: Facial feature calculation unit
- 203: Vein sensor
- 204: Vein reading unit
- 205: Display device
- 206: Reception unit
- 300: Multi-biometric authentication system

## Claims

1. An control method executed by a computer, the control method comprising:
acquiring a plurality of captured images captured by a plurality of cameras that capture different positions in an area;
presuming a movement state of any of candidates for persons who have entered the area based on facial images included in the plurality of acquired captured images;
determining whether or not a similarity between a past movement state of the any of candidates and the presumed movement state meets a criterion by reference to a storage unit that stores past movement states of the candidates for persons who have entered the area;
selecting a candidate list that includes the any of candidates among candidate lists of the persons who have entered the area in the past in a case where the similarity meets the criterion; and
reading out biometric information of a candidate included in the selected candidate list from a biometric information database to a storage unit.

2. The control method according to claim 1, wherein the computer executes processing of, when selecting a candidate for the persons who have entered the area, reflecting a purchase history in the area of the selected candidate.

3. The control method according to claim 1 or 2, wherein the past movement state is a movement state in a predetermined time range before purchase in the area, of a person that indicates the past movement state.

4. The control method according to any one of claims 1 to 3, wherein the computer executes processing of performing authentication by collating biometric information acquired from the person in the area and the biometric information read in the storage unit.

5. An information processing device comprising:
an acquisition unit configured to acquire a plurality of captured images captured by a plurality of cameras that capture different positions in an area;
a determination unit configured to presume a movement state of any of candidates for persons who have entered the area based on facial images included in the plurality of captured images acquired by the acquisition unit, and determine whether or not a similarity between a past movement state of the any of candidates and the presumed movement state meets a criterion by reference to a storage unit that stores past movement states of the candidates for persons who have entered the area; and
a readout unit configured to select a candidate list that includes the any of candidates among candidate lists of the persons who have entered the area in the past in a case where the similarity meets the criterion, and read out biometric information of a candidate included in the selected candidate list from a biometric information database to a storage unit.

6. The information processing device according to claim 5, further comprising:
a selection unit configured to select a candidate for the persons who have entered the area, wherein
the selection unit reflects a purchase history in the area of the selected candidate when selecting the candidate.

7. The information processing device according to claim 5 or 6, wherein the past movement state is a movement state in a predetermined time range before purchase in the area, of a person that indicates the past movement state.

8. The information processing device according to any one of claims 5 to 7, further comprising:
an authentication unit configured to perform authentication by collating biometric information acquired from the person in the area and the biometric information read in the storage unit.

9. A control program for causing a computer to execute:
processing of acquiring a plurality of captured images captured by a plurality of cameras that capture different positions in an area;
processing of presuming a movement state of any of candidates for persons who have entered the area based on facial images included in the plurality of acquired captured images;
processing of determining whether or not a similarity between a past movement state of the any of candidates and the presumed movement state meets a criterion by reference to a storage unit that stores past movement states of the candidates for persons who have entered the area;
processing of selecting a candidate list that includes the any of candidates among candidate lists of the persons who have entered the area in the past in a case where the similarity meets the criterion; and
processing of reading out biometric information of a candidate included in the selected candidate list from a biometric information database to a storage unit.

10. The control program according to claim 9, for causing the computer to further execute:
when selecting a candidate for the persons who have entered area, processing of reflecting a purchase history in the area of the selected candidate.

11. The control program according to claim 9 or 10, wherein the past movement state is a movement state in a predetermined time range before purchase in the area, of a person that indicates the past movement state.

12. The control program according to any one of claims 9 to 11, for causing the computer to further execute:
processing of performing authentication by collating biometric information acquired from the person in the area and the biometric information read in the storage unit.

13. A control method for a computer to execute a process comprising:
acquiring a plurality of captured images captured by a plurality of cameras that capture different positions in an area;
determining whether or not there is a purchase history in the area by reference to a storage unit that stores the purchase history in the area for candidates for persons who have entered the area based on facial images included in the plurality of captured images; and
controlling whether or not to read out biometric information of a candidate included in a candidate list of the persons who have entered the area in the past from a biometric information database to a storage unit according to the purchase history.

14. A control method for a computer to execute a process comprising:
acquiring a plurality of captured images captured by a plurality of cameras that capture different positions in an area;
determining whether or not there is a purchase history in the area by reference to a storage unit that stores the purchase history in the area for candidates for persons who have entered the area based on facial images included in the plurality of captured images acquired; and
selecting a candidate list that includes any of candidates among candidate lists of the persons who have entered the area in the past according to the purchase history, and read out biometric information of a candidate included in the selected candidate list from a biometric information database to a storage unit.

15. An information processing device comprising:
an acquisition unit configured to acquire a plurality of captured images captured by a plurality of cameras that capture different positions in an area;
a determination unit configured to determine whether or not there is a purchase history in the area by reference to a storage unit that stores the purchase history in the area for candidates for persons who have entered the area based on facial images included in the plurality of captured images acquired by the acquisition unit; and
a readout unit configured to control whether or not to read out biometric information of a candidate included in a candidate list of the persons who have entered the area in the past from a biometric information database to a storage unit according to the purchase history.

16. An information processing device comprising:
an acquisition unit configured to acquire a plurality of captured images captured by a plurality of cameras that capture different positions in an area;
a determination unit configured to determine whether or not there is a purchase history in the area by reference to a storage unit that stores the purchase history in the area for candidates for persons who have entered the area based on facial images included in the plurality of captured images acquired by the acquisition unit; and
a readout unit configured to select a candidate list that includes any of candidates among candidate lists of the persons who have entered the area in the past according to the purchase history, and read out biometric information of a candidate included in the selected candidate list from a biometric information database to a storage unit.
